Europäisches Patentamt

(19) European Patent Office

Office européen des brevets

(11) Numéro de publication: **0 193 463**

**A2**

(12) ## DEMANDE DE BREVET EUROPEEN

(21) Numéro de dépôt: **86400384.3**

(22) Date de dépôt: **24.02.86**

(51) Int. Cl.⁴: **B 23 Q 7/04**
**B 23 Q 7/10, B 65 G 47/90**
**B 65 G 65/00**

(30) Priorité: **26.02.85 FR 8502739**

(43) Date de publication de la demande:
**03.09.86 Bulletin 86/36**

(84) Etats contractants désignés:
**AT BE CH DE GB IT LI LU NL SE**

(71) Demandeur: **TRAUB FRANCE s.a.r.l.:Société dite**
**Z.I. Sud-BP 40 3, Rue du Dr. J. Charcot**
**F-91421 Morangis Cédex (Essonnne)(FR)**

(72) Inventeur: **Priore, Nicolas**
**3 rue du Docteur Charcot Z.I.**
**Sud Morangis (Essonne)(FR)**

(74) Mandataire: **Cabinet BERT, DE KERAVENANT &**
**HERRBURGER**
**115, Boulevard Haussmann**
**F-75008 Paris(FR)**

(54) **Dispositif de chargement et de déchargement des pièces sur une machine-outil comprenant un robot manipulateur.**

(57) a) L'invention concerne un robot manipulateur.

b) Robot caractérisé en ce qu'il comporte un chariot (2) mobile en translation, ce chariot (2) étant pourvu de deux têtes porte-griffes (7), les griffes de l'une des têtes (7) étant ouvertes pour saisir une pièce présentée sur un plateau tandis que les griffes de l'autre tête sont en position de serrage pour décharger la pièce usinée sur un plateau (5), la saisie d'une pièce brute et le déchargement d'une pièce usinée étant effectués en un mouvement simultané, le robot (2) étant associé en outre à un dispositif de chargement automatique des plateaux.

c) La présente invention trouve son application principale dans l'industrie de la machine-outil.

Croydon Printing Company Ltd.

1

Dispositif de chargement et de déchargement des pièces sur une machine-outil comprenant un robot manipulateur.-

L'invention concerne un robot manipulateur pour le chargement et le déchargement de pièces à usiner notamment pour machines-outils telles que tour ou autre.

On connaît déjà des robots manipulateurs permettant le chargement et le déchargement de pièces à usiner. Cependant, les opérations des robots faisant partie de l'art antérieur se décomposent en une série de mouvements plus ou moins nombreux déterminant une perte de temps et par conséquent des rythmes de travail très lents d'où une productivité moindre. En effet, dans le cas des robots manipulateurs connus, il est nécessaire, quel que soit le dispositif d'alimentation en pièce à usiner, de prévoir au moins deux opérations essentielles et distinctes. La première opération consiste à saisir la pièce à usiner sur un plateau ou un carrousel puis de l'amener en regard de l'outil de travail. La seconde opération consiste à reprendre la pièce usinée puis la replacer dans le logement du plateau ou du carrousel laissé vacant. Une troisième opération consiste ensuite à évacuer la pièce usinée. Enfin, une dernière opération consiste à repositionner les organes de prise du robot en regard d'une nouvelle pièce brute. Ces diverses manipulations supposent en conséquence un grand nombre de mouvements occasionnant une perte de temps importante.

La présente invention a pour but de remédier

2                                    0193463

à ces inconvénients et de créer un robot manipulateur permettant le chargement et le déchargement simultanés de pièces brutes et de pièces usinées à l'aide de mouvements simples d'où des cadences beaucoup plus rapides et une productivité accrue.

La présente invention a également pour but de créer un robot manipulateur de conception simple et d'une manipulation aisée avec une grande rapidité d'exécution tout en permettant le traitement simultané de deux pièces l'une brute, l'autre usinée.

A cet effet, l'invention concerne un robot manipulateur pour le chargement et le déchargement de pièces à usiner notamment pour machines-outils telles que tour ou autres, caractérisé en ce qu'il comporte un chariot mobile en translation sur un portique sous l'action d'un vérin pour amener une pièce à usiner à partir d'un premier plateau vers l'outil de travail et séposée simultanément une pièce usinée sur un second plateau, le chariot étant pourvu de deux têtes porte-griffes, les griffes de l'une des têtes étant ouvertes pour saisir une pièce présentée sur un plateau tandis que les griffes de l'autre tête sont en position de serrage pour décharger la pièce usinée sur un plateau, la saisie d'une pièce brute et le déchargement d'une pièce usinée étant effectués en un mouvement simultané, le robot étant associé en outre à un dispositif de chargement automatique des plateaux, les diverses opérations d'un cycle de travail du robot manipulateur et du dispositif de chargement étant effectuées à partir d'une unité de commande programmable.

Un tel robot manipulateur permet un gain de temps extrêmement important du fait du traitement simul- tané d'une pièce brute et d'une pièce usinée.

Suivant une autre caractéristique de l'invention, le chariot pourvu des têtes porte-griffes est mobile en translation horizontale ainsi qu'en rotation autour de son axe de guidage pour la prise en charge d'une pièce usinée et la mise en place d'une pièce brute.

Suivant une autre caractéristique de l'invention, les têtes porte-griffes sont pivotantes sur le chariot.

Suivant une autre caractéristique de l'invention, les plateaux, pourvus de pièces brutes et de pièces usinées, disposés sous le chariot porte-griffes, sont placés sur des supports mobiles en translation verticale.

Suivant une autre caractéristique de l'invention, les plateaux portés par les supports mobiles verticalement sont mis en rotation suivant un angle déterminé à la fin de chaque cycle de travail du chariot.

Suivant une autre caractéristique de l'invention, les plateaux sont de forme circulaire et sont pourvus à leur périphérie de porte-palettes permettant le logement soit des pièces brutes, soit des pièces usinées.

Suivant une autre caractéristique de l'invention, le dispositif de chargement automatique des plateaux comporte un bâti pourvu de chaque côté de colonnes verticales, chaque colonne comprenant une chaîne sans fin entraînée par un moteur et sur laquelle sont fixés des bras supports portant les plateaux, une table mobile en translation horizontale sous l'effet d'un vérin étant disposée dans la zone comprise entre les deux colonnes.

Enfin, suivant une autre caractéristique de l'invention, les bras de l'une des colonnes portant les plateaux en regard de la table mobile, sont animés d'un mouvement de descente tandis que les bras en regard de la table mobile de l'autre colonne sont animés d'un mouvement de montée.

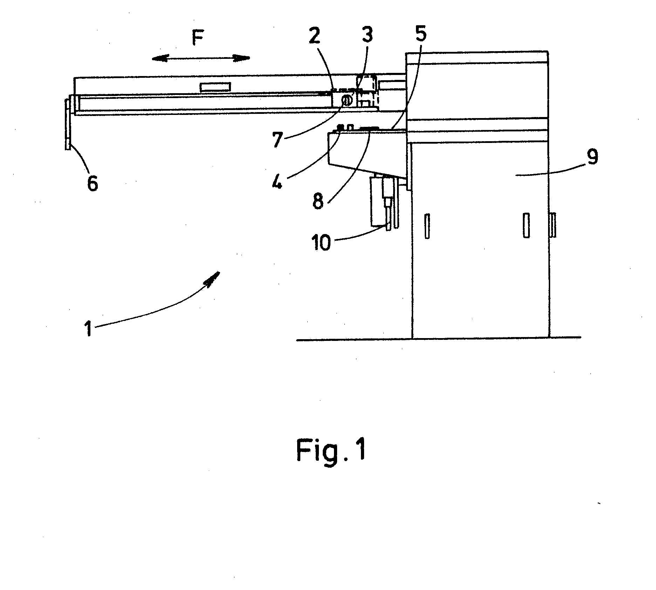

La présente invention sera mieux comprise à l'aide d'un mode de réalisation de l'invention suivant laquelle la figure 1 est une vue de côté partielle du robot manipulateur.

    - la figure 2 est une vue de face du dispositif de chargement automatique,

    - la figure 3 est une vue partielle de dessus du dispositif de chargement conforme à la figure 2 précédente.

    Selon la figure 1, le robot manipulateur 1 permet le chargement et le déchargement simultané de pièces à usiner notamment pour des machines-outils telles que des tours. Le robot manipulateur 1 comporte un chariot mobile 2. Le chariot mobile 2 est monté sur un portique 3. Le chariot mobile 2 est mobile en translation sous l'action d'un vérin. Il permet d'amener une pièce à usiner 4 à partir d'un premier plateau 5 vers l'outil de travail non représenté sur cette figure et raccordé à un dispositif de rattachement 6. Cet outil peut être une fraise par exemple. Simultanément, le chariot permet de déposer une pièce usinée sur un second plateau non visible sur cette figure lorsqu'il prend en charge la pièce brute 4. Le chariot 2 est pourvu de deux têtes porte-griffes 7. Lorsque les griffes de l'une des deux têtes 7 sont ouvertes pour saisir la pièce brute 4 présentée sur le plateau 5, les griffes de l'autre tête, disposée à l'arrière du chariot, sont en position de serrage pour décharger la pièce usinée sur un plateau. Ainsi, le déchargement d'une pièce usinée et le chargement d'une pièce brute s'effectue en un seul mouvement simultané.

    Le chariot 2 est mobile en translation horizontale mais également en rotation autour de son axe de guidage. Ces deux mouvements combinés de translation et de rotation du chariot permettent de traiter simultanément la pièce brute et la pièce usinée.

    Les plateaux dont un seul 5, est représenté sur cette figure, servent de supports aux pièces brutes et aux pièces usinées. Ces plateaux sont disposés sous le chariot 2 lorsqu'il est dans sa position correspondant au début d'un cycle de travail tel que représenté sur cette figure. Les plateaux 5 sont placés sur des supports 8 mobiles en translation verticale.

Les plateaux 5 sont mis en rotation suivant un angle déterminé à la fin de chaque cycle de travail du chariot 2 afin d'être correctement positionnés en regard des têtes porte-griffes traitant simultanément les pièces brutes et les pièces usinées.

Les plateaux 5 sont de forme circulaire et sont pourvus à leur périphérie de porte-palettes permettant le logement soit des pièces brutes, soit des pièces usinées.

Les têtes porte-griffes 7 sont montées pivotantes sur le chariot 2 qui se déplace en translation suivant la flèche F.

Les diverses opérations d'un cycle de travail du robot 1 sont effectuées à partir d'une unité de commande programmable 9.

Le cycle de travail du robot 1 s'effectue de la manière suivante. Tout d'abord, les plateaux 5 sont positionnés dans l'axe du chariot 2 du portique 3 et des têtes porte-griffes 7. Les plateaux sont déplacés verticalement vers le haut à l'aide de vérins 10. Dans cette position, les griffes de la première tête sont ouvertes pour saisir la pièce brute 4. Les griffes de la tête disposée de l'autre côté du chariot non représenté sur cette figure sont fermées et enserrent la pièce usinée destinée à être déposée sur le plateau correspondant.

Ensuite, les griffes de la tête 7 enserrent la pièce brute à usiner. Simultanément, les griffes de la deuxième tête non représentée sur la figure sont ouvertes et la pièce usinée est déposée sur le plateau. Cette seconde tête est donc libre pour saisir une nouvelle pièce usinée. Les plateaux 5 sont alors abaissés. Les deux têtes 7 sont pivotées de 90° et le chariot 2 est lancé en direction de l'outil de la machine. Lorsque le chariot 2 arrive à proximité de l'outil, le portique 3 est pivoté de 90°. Après pivotement du portique, le chariot 2 parcourt la course d'introduction en présentant la tête libre avec ses griffes ouvertes. Les griffes sont ensuite fermées pour serrer la pièce usinée portée par l'outil. L'outil libère la pièce usinée et détermine un léger recul du chariot 2. Le portique portant le chariot est pivoté de 180° de manière à présenter la pièce brute en regard de l'outil. Ce dernier prend en charge la pièce brute ce qui détermine l'ouverture des griffes de la tête libérée et le recul du chariot 2. Le portique pivote de 90° de telle sorte que la tête libre puisse venir en regard d'une nouvelle pièce brute à saisir lorsque le chariot 2 sera revenu dans sa position initiale. Ceci détermine la fin d'un cycle de travail.

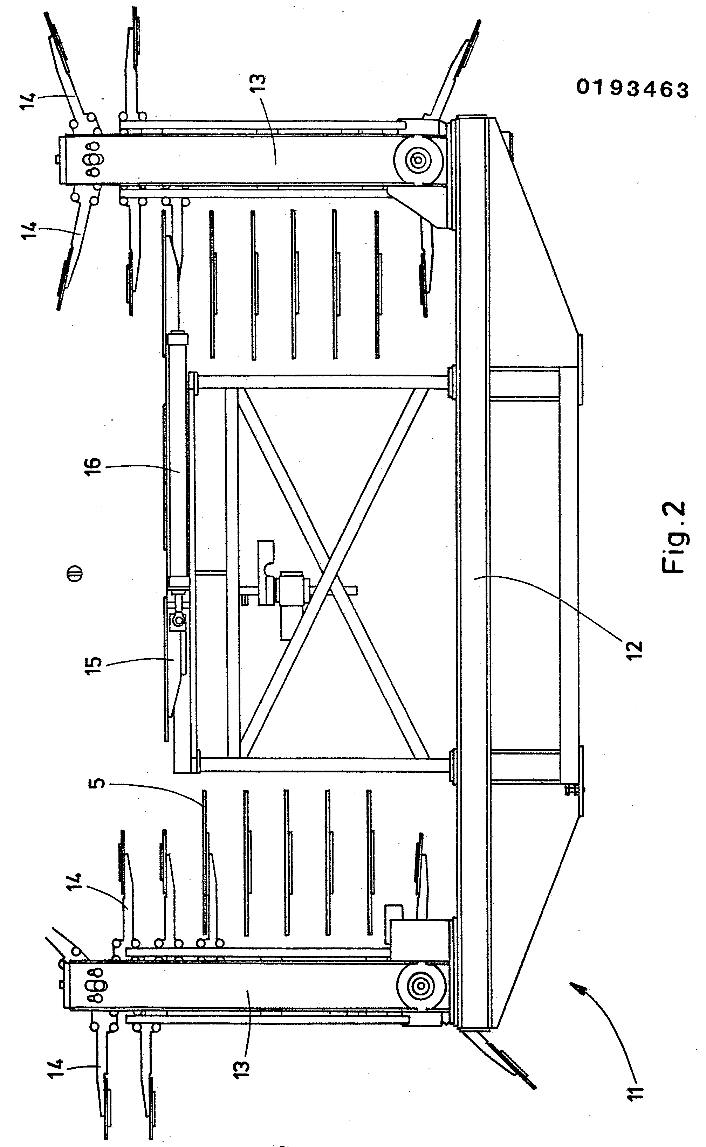

Selon la figure 2, le dispositif de chargement 11 comporte notamment un bâti 12. Celui-ci est pourvu de chacun de ses côtés d'une colonne verticale 13. Chaque colonne 13 comporte une chaîne sans fin ou tout autre dispositif analogue entraînée par un moteur. Des bras support 14 sont fixés à la chaîne sans fin. Ils portent des plateaux circulaires 5. L'une des colonnes 13 porte les plateaux pourvus des pièces brutes tandis que l'autre colonne porte les plateaux pourvus des pièces usinées. Une table 15 mobile en translation horizontale sous l'effet d'un vérin 16 est disposée entre les deux colonnes 13. Les bras 14 situés en regard de la table 15 de l'une des colonnes 13 sont animés d'un mouvement vers le bas tandis que les bras 14 de l'autre colonne 13 sont animés d'un mouvement de montée. Ce dispositif de chargement automatique permet de présenter les pièces brutes toujours au même point avec un seul mouvement de translation tout en permettant simultanément de saisir une pièce brute et de déposer la pièce usinée en un seul mouvement.

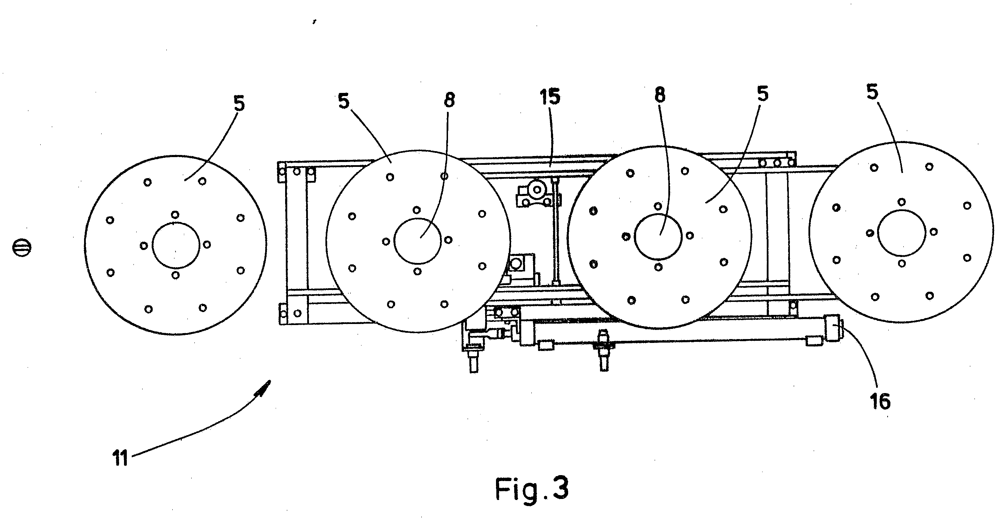

Selon la figure 3, le dispositif de chargement automatique 11 n'est représenté que partiellement. Les deux plateaux centraux 5 et le plateau situé à l'extrême droite de ce dessin sont disposés sur la table 15 mobile en translation sous l'effet du vérin 16. Le plateau 5, disposé à l'extrême droite de cette figure, comporte les pièces usinées destinées à être transférées, tandis que le plateau 5,disposé à l'extrême gauche de la figure 5, comporte les pièces brutes destinées à être prises en charge par la table 15. Les mouvements de translation combinés de la table 15 en translation horizontale et des supports 8 en translation verticale permettent en un seul mouvement d'obtenir le dégagement du plateau 5 portant les pièces usinées et de présenter un nouveau plateau portant les pièces brutes dans la position adéquate à leur prise en charge par la tête porte-griffes prenant en charge les pièces brutes. La présentation des pièces brutes s'effectue sur le plateau suivant un seul axe rotatif déterminé par le support 8.

R E V E N D I C A T I O N S

1°) Robot manipulateur pour le chargement et le déchargement de pièces à usiner notamment pour machines-outils telle que tours ou autre, caractérisé en ce qu'il comporte un chariot (2) mobile en translation sur un portique (3) sous l'action d'un vérin pour amener une pièce à usiner à partir d'un premier plateau (5) vers l'outil de travail et déposer simultanément une pièce usinée sur un second plateau (5), le chariot (2) étant pourvu de deux têtes porte-griffes (7), les griffes de l'une des têtes étant ouvertes pour saisir une pièce (4) présentée sur un plateau (5) tandis que les griffes de l'autre tête sont en position de serrage pour décharger la pièce usinée sur un plateau, la saisie d'une pièce brute et le déchargement d'une pièce usinée étant effectués en un mouvement simultané, le robot 1 étant associé en outre à un dispositif de chargement automatique (11) des plateaux (5), les diverses opérations d'un cycle de travail du robot manipulateur (1) et du dispositif de chargement (11) étant effectuées à partir d'une unité de commande programmable (9).

2°) Robot conforme à la revendication 1, caractérisé en ce que le chariot (2), pourvu des têtes porte-griffes (7), est mobile en translation horizontale ainsi qu'en rotation autour de son axe de guidage pour la prise en charge d'une pièce usinée et la mise en place d'une pièce brute (4).

3°) Robot conforme aux revendications 1 et 2 précédentes, caractérisé en ce que les têtes porte-griffes (7) sont pivotantes sur le chariot (2).

4°) Robot conforme à l'une quelconque des revendications 1 à 3 précédentes, caractérisé en ce que les plateaux (5), pourvus de pièces brutes et de pièces usinées et disposés sous le chariot (2) comportant les têtes porte-griffes (7), sont placés sur des supports (8) mobiles en translation verticale.

5°) Robot conforme à l'une quelconque des revendications 1 à 4 précédentes, caractérisé en ce que les plateaux (5), portés par les supports (8) mobiles verticalement, sont mis en rotation suivant un angle déterminé à la fin de chaque cycle de travail du chariot (2).

6°) Robot conforme à l'une quelconque des revendications 1 à 5, caractérisé en ce que les plateaux (5) sont de forme circulaire et sont pourvus à leur périphérie de porte-palettes permettant le logement soit des pièces brutes, soit des pièces usinées.

7°) Robot conforme à l'une quelconque des revendications 1 à 6 précédentes, caractérisé en ce que le dispositif de chargement automatique (11) des plateaux (5) comporte un bâti (12) pourvu de chaque côté de colonnes verticales (13), chaque colonne (13) comprenant une chaîne sans fin entraînée par un moteur et sur laquelle sont fixés des bras support (14) portant les plateaux (5), une table (15) mobile en translation horizontale sous l'effet d'un vérin, étant disposée dans la zone comprise entre les deux colonnes (13).

8°) Robot conforme à l'une quelconque des revendications 1 à 7 précédentes, caractérisé en ce que les bras (14) de l'une des colonnes (13), portant les plateaux (5) en regard de la table mobile (15), sont animés d'un mouvement de descente tandis que les bras (14), en regard de la table mobile (15) de l'autre colonne (13), sont animés d'un mouvement de montée.

Fig.1

0193463

Fig.2

Fig.3

0193463